# EUROPEAN PATENT APPLICATION

(11) **EP 3 451 412 A1**
(43) Date of publication of application: **06.03.2019**
(21) Application number: 16900206.0
(22) Date of filing: 27.10.2016
(51) Int. Cl.: H01M 2/10, B60K 1/04

(54) **BATTERY PACK FIXING STRUCTURE AND BATTERY PACK REPLACING APPARATUS**

(30) Priority: 29.04.2016 CN 201610282346
(71) Applicant: Nio Nextev Limited, Central, Hong Kong (CN)
(72) Inventor: HUANG, Chendong, Shanghai (CN); FAN, Jun, Shanghai (CN); ZHAO, Wenpeng, Shanghai (CN)
(74) Representative: Vossius & Partner Patentanwälte Rechtsanwälte mbB
(86) International application number: PCT/CN2016/103587
(87) International publication number: WO 2017/185698

(57) **Abstract**

Provided is a battery pack fixing structure and a battery pack replacing apparatus. The battery pack fixing structure comprises a base body, a driving unit, a connecting rod transmission unit and a locking unit, wherein the base body is fixed to an electric vehicle body and configured to supporting the driving unit, the connecting rod transmission unit and the locking unit; the driving unit is configured to supply a driving force; the connecting rod transmission unit is configured to enabling the locking unit to be unlocked under action of the driving force, and enabling the locking unit to be locked after the driving force is removed; and the locking unit is configured to lock the battery pack in a locking state, and to release the battery pack in an unlocking state. The battery pack fixing structure and the battery pack replacing apparatus provided by the invention are simple in structure, low in cost and simple to maintain, and can realize a highly reliable battery pack locking performance; meanwhile, due to the simple operation, the battery pack can be replaced conveniently, rapidly and efficiently.

## Description

### Technical Field

The invention relates to the field of electric vehicles, in particular to a battery pack fixing structure and a battery pack replacing apparatus of an electric vehicle.

### Background Art

With the development of society and economy and the growing awareness of energy conservation and environmental protection, electric vehicles, as new energy vehicles, are becoming the future development direction of vehicles. An energy storage system, such as a battery, of an electric vehicle is a critical part of the electric vehicle. Batteries of current electric vehicles usually have a relatively long charging time and a relatively short range per charge, which are major factors that limit the popularization of electric vehicles. Under the premise that it is difficult to make a significant breakthrough in the existing battery technology, battery pack replacement becomes the main way to solve the above problem. That is, when a battery of an electric vehicle indicates that the battery is low, the battery may be directly replaced with a fully charged battery pack at a battery swap station, so as to increase the range. In this way, a new requirement is provided for the efficiency of battery pack replacement. It is well known that a battery pack of an electric vehicle has a large volume and a heavy weight, so that if the installation method is too complicated, the battery swap station may have low battery swap efficiency and low reliability. For example, a conventional method of fixing a battery pack with multiple bolts has problems of being time-consuming, limited frequency of replacement, complicated operation, etc. Therefore, there is an urgent need to develop a novel highly reliable, convenient, and rapid battery pack replacing apparatus.

Chinese invention patent application No. 201310051930.5 discloses a chassis-mount rapid replacement and locking mechanism for traction batteries, the mechanism comprising a battery pack and a locking and mounting support fixedly mounted on a chassis of an electric vehicle. The battery pack is provided with a lock catch, and the locking and mounting support is provided with a bolt adapted to the lock catch. During installation of a battery pack, the bolt is engaged in a locking hole so as to fix the battery pack. However, the locking mechanism disclosed in this patent document merely provides support for the battery pack in a vertical direction, and does not implement complete locking for the battery pack; therefore, the locking reliability of the battery pack is not ensured. In addition, the solution disclosed in this patent document does not disclose how to detach a battery pack.

Chinese invention patent application No. 200910142368.0 discloses a rapid installation and rapid replacement system and a rapid installation and rapid replacement method for a battery of an electric vehicle. The rapid installation and rapid replacement system comprises a battery pack, a mounting plate, and a battery pack protection frame disposed on a vehicle body. The mounting plate is provided with a suspension ring, and the protection frame is correspondingly provided with a lock body. During installation of a battery, a lock hook disposed on the lock body passes through the suspension ring and is connected and locked to the battery. However, the system disclosed in this patent document has the defects of complex structure, high cost and poor reliability, and there is always a need to provide additional energy to maintain the operation of a locking mechanism.

### Summary of the Invention

The invention is proposed in view of the foregoing defects in the prior art. That is, the invention provides a battery pack fixing structure and a battery pack replacing apparatus.

According to a first aspect of the invention, a battery pack fixing structure is provided, comprising: a base body, a driving unit, a connecting rod transmission unit and a locking unit, wherein the base body is fixed to an electric vehicle body and configured to support the driving unit, the connecting rod transmission unit and the locking unit; the driving unit is configured to supply a driving force; the connecting rod transmission unit is configured to enable the locking unit to be unlocked under action of the driving force, and enable the locking unit to be locked after the driving force is removed; and the locking unit is configured to lock the battery pack in a locking state, and to release the battery pack in an unlocking state.

Further, the driving unit comprises an electromagnet pressing block and a frame body supporting the electromagnet pressing block on the base body; and when an electrical signal is applied, the driving force provided by the driving unit is an electromagnetic attraction force.

Further, the frame body comprises: a support structure and a guide structure that has one end fixed to the support structure and the other end movably connected on the base body.

Further, a limiting structure is formed on the frame body and is configured to limit a movement range of the driving unit.

Further, the driving unit further comprises an elastic restoring element disposed between the frame body and the base body.

Further, the connecting rod transmission unit comprises a first connecting rod portion, a second connecting rod portion and a third connecting rod portion; the first connecting rod portion moves downward under action of the driving force, and moves upward after the driving force is removed; the second connecting rod portion has one end of is connected to the first connecting rod portion, has the other end connected to the third connecting rod portion, and is rotatably fixed to the base body at a position between the one end and the other end, so as to transfer the movement of the first connecting rod portion to the third connecting rod portion; and the third connecting rod portion moves upward or downward corresponding to the first connecting rod portion, so as to enable the locking unit to be unlocked or locked.

Further, universal balls are formed on the first connecting rod portion and the third connecting rod portion, and the universal balls are mated with sockets in the second connecting rod portion.

Further, the second connecting rod portion is provided with a shaft hole between the one end and the other end, a connecting rod shaft fixed to the base body is sleeved in the shaft hole, so as to enable the second connecting rod portion to rotate around the connecting rod shaft to transfer the movement of the first connecting rod portion to the third connecting rod portion.

Further, the first connecting rod portion comprises a force bearing unit for bearing the driving force, and moves downward under action of the driving force.

Further, the first connecting rod portion further comprises an elastic restoring element for enabling the force bearing unit to return to an original position, one end of the elastic restoring element is fixed to the base body, and the other end of the elastic restoring element is fixed to the force bearing unit, so as to enable the first connecting rod portion to return to an initial position after the driving force is removed.

Further, the third connecting rod portion comprises a stopping structure configured to enabling the locking unit to be locked or unlocked.

Further, the stopping structure is wedge-shaped in a movement direction of the third connecting rod portion.

Further, the third connecting rod portion further comprises an elastic restoring element configured to enabling the third connecting rod portion to return to an original position.

Further, the locking unit comprises a hook and a stopped structure; the hook rotates around a rotating shaft to lock the battery pack or release the battery pack; and the stopped structure is operated by the connecting rod transmission unit to enable the hook to lock the battery pack or release the battery pack.

Further, the locking unit comprises a hook and a stopped structure; the hook rotates around a rotating shaft to lock the battery pack or release the battery pack; and the stopped structure cooperates with the stopping structure to enable the hook to lock the battery pack or release the battery pack.

Further, the locking unit further comprises an elastic restoring element to enable the hook to remain in a closed state.

According to a second aspect of the invention, a battery pack replacing apparatus is provided, comprising: a battery pack fixing structure of any one as described above; and a control unit configured to applying an electrical signal to the driving unit to enable the driving unit to provide a driving force.

For the battery pack fixing structure and the battery pack replacing apparatus according to the invention, the driving unit is electrified and then provides power to drive action of the connecting rod transmission unit, so as to enable the locking unit to be unlocked and to enable the locking unit to be locked after the connecting rod transmission unit is restored.

In this way, the unlocking and locking of a battery pack of an electric vehicle as well as the rapid replacement and rapid mounting of the battery pack are realized. Therefore, the battery pack fixing structure and the battery pack replacing apparatus provided by the invention are simple in structure, low in cost and simple to maintain. Since an external electrical signal is used to perform control to realize locking of the locking unit after power-off, a highly reliable battery pack locking performance can be realized, and a function of repeated locking and unlocking can be realized. Meanwhile, due to the simple operation, the battery pack can be replaced conveniently, rapidly and efficiently.

The technical solutions of the invention are further described in detail below in conjunction with the accompanying drawings and specific implementations, and beneficial effects of the invention are further clarified.

### Brief Description of the Drawings

The accompanying drawings described herein are used to provide further understanding of the invention, constitute a part of the invention, and are used to explain the invention but do not constitute an improper limitation on the invention.
FIG. 1 is a three-dimensional schematic structural diagram of a battery pack fixing structure in an unlocking state according to a preferred embodiment of the invention.
FIG. 2 is a three-dimensional schematic structural diagram of a base body of the battery pack fixing structure according to a preferred embodiment of the invention.
FIG. 3 is a schematic structural diagram of a driving unit of the battery pack fixing structure according to a preferred embodiment of the invention.
FIG. 4 is a schematic structural diagram of a connecting rod unit of the battery pack fixing structure according to a preferred embodiment of the invention.
FIG. 5 is a schematic structural diagram of a locking unit of the battery pack fixing structure according to a preferred embodiment of the invention.
FIG. 6 is a front view of the battery pack fixing structure in an unlocking state according to a preferred implementation of the invention.
FIG. 7 is a three-dimensional schematic structural diagram of the battery pack fixing structure in a locking state according to a preferred implementation of the invention.
FIG. 8 is a front view of the battery pack fixing structure in a locking state according to a preferred implementation of the invention.
FIG. 9 is a structural block diagram of a battery pack replacing apparatus according to a preferred embodiment of the invention.

### Detailed Description of Embodiments

To make the objectives, technical solutions and advantages of the invention more clearly, the technical solutions of the invention will be clearly and completely described below in conjunction with specific embodiments and corresponding accompanying drawings of the invention. Obviously, the described embodiments are merely a part rather than all of the embodiments of the invention. All other embodiments obtained by persons of ordinary skill in the art based on the embodiments of the invention without creative efforts shall fall within the scope of protection of the invention.

For a battery pack fixing structure and a battery pack replacing apparatus according to the invention, a driving unit is electrified and then provides power to drive action of a connecting rod transmission unit, so as to enable a locking unit to be unlocked and to enable the locking unit to be locked after the connecting rod transmission unit is restored. In this way, unlocking and locking of a battery pack of an electric vehicle as well as rapid replacement and rapid mounting of the battery pack are realized. Therefore, the battery pack fixing structure and the battery pack replacing apparatus provided by the invention are simple in structure, low in cost and simple to maintain. Since an external electrical signal is used to perform control to realize locking of the locking unit after power-off, a highly reliable battery pack locking performance can be realized, and a function of repeated locking and unlocking can be realized. Meanwhile, due to the simple operation, the battery pack can be replaced conveniently, rapidly and efficiently.

Specific implementations of the invention are described below in detail in conjunction with the accompanying drawings.

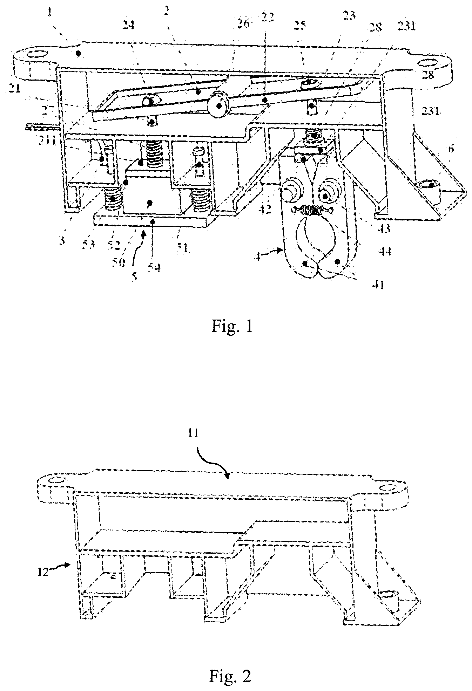

FIG. 1 is a three-dimensional schematic structural diagram of a battery pack fixing structure in an unlocking state according to a preferred embodiment of the invention. The battery pack (not shown) fixing structure is provided at an appropriate position on an electric vehicle for fixing a battery pack, for example, a chassis of the electric vehicle, and a plurality of battery pack fixing structures may be provided according to requirements to reliably fix a battery pack at multiple positions. As shown in FIG. 1, the battery pack fixing structure comprises: a base body 1, a driving unit 5, a connecting rod transmission unit 2, and a locking unit 4. The base body 1 is fixed to such as the chassis of the electric vehicle by bolt or another connection way, and is configured to supporting the driving unit 5, the connecting rod transmission unit 2, the locking unit 4 and other parts. The driving unit 5 supplies a driving force when an electrical signal is applied to the driving unit 5. The connecting rod transmission unit 2 enables the locking unit 4 to be unlocked under action of the driving force. The locking unit 4 locks the battery pack in a locking state, and releases the battery pack in an unlocking state.

The parts are described below one by one.

FIG. 2 is a schematic structural diagram of the base body 1 according to a preferred embodiment of the invention. As shown in FIG. 2, the base body 1 preferably comprises an upper fixing support 11 configured to fixing an electric vehicle body by such as a bolt fastening way; and a lower fixing frame 12 configured to supporting the driving unit 5, the connecting rod transmission mechanism 2, the locking unit 4 and other parts. The base body 1 is not limited to the structure as shown in FIG. 2, provided that it can realize the corresponding fixing and support functions. The base body 1 is made of, for example, a metal material, provided that it can provide a sufficient strength to support the battery pack and fix the battery pack.

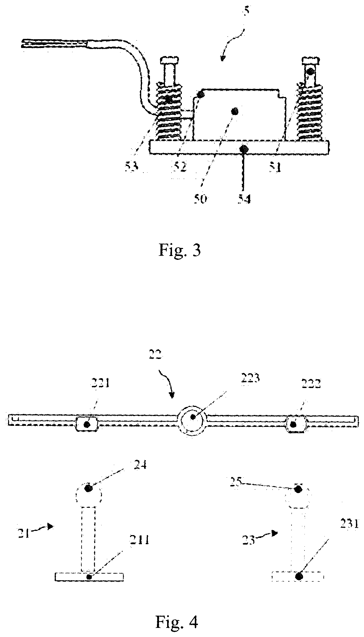

The driving unit 5 can provide the driving force when an electrical signal is applied to the driving unit 5. In an embodiment of the invention, the driving unit 5 comprises an electromagnet pressing block 50 and a frame body supporting the electromagnet pressing block on the base body 1. The driving unit 5 can attract the connecting rod transmission unit 2 to move when the electrical signal is applied to the driving unit 5. FIG. 3 is a schematic structural diagram of the driving unit according to a preferred implementation of the invention. As shown in FIG. 3, the frame body comprises a support structure 54 and a pair of guide structures 51 each having one end fixed to the support structure 54 and the other end movably connected to the lower fixing frame of the base body 1. In a preferred embodiment of the invention, the support structure 54 is a support plate, and the guide structure 51 is a guide column. The support plate is configured to supporting the electromagnet pressing block 50, and moves together with the electromagnet pressing block 50 in a direction guided by the guide column 51, and in the structure as shown in FIG. 1, the guide column 51 guides the electromagnet pressing block to move up and down. It should be noted that the support structure is obviously not limited to the support plate 54 in a plate shape, provided that it can drive a driving apparatus to move, for example, the support structure may be in a frame form. In addition, the guide structure is not limited to the guide column 51 in a column shape, provided that it can realize guiding, for example, a track or a strip structure. Meanwhile, in this embodiment, there are two guiding columns 51. However, a quantity of the guiding columns 51 may be set according to a requirement.

The driving unit 5 preferably further comprises a limiting structure 52 formed on an outer frame. In the embodiment shown in FIG. 1, the limiting structure 52 is a notch 52 provided on each of the left and right sides of the outer frame, and the notch 52 abuts against the lower fixing frame of the base body when the driving apparatus moves upward to a preset position so as to limit the electromagnet pressing block to move upward. The limiting structure is obviously not limited to the foregoing notch and may be in the form such as a protruding limiting block. In addition, in order to realize rapid restoration of the driving unit, the driving unit 5 further preferably comprises a restoring elastic unit. In the embodiments as shown in FIGS. 1 and 3 of the invention, the restoring elastic unit is a restoring spring 53 sleeved over the guide column 51. However, the restoring spring 53 may not be limited to being sleeved over guide column 51 and may not be limited to being in the form of a spiral spring, provided that it can realize a restoring function. In addition, the driving unit 5 may automatically restore relying on its own weight when the electrical signal is cut off.

The above description has been made by taking the electromagnet pressing block as a driving unit as an example. However, the driving unit 5 of the invention is obviously not limited to supply of a driving force with the electromagnet pressing block described above. For example, it may also be a cam structure or the like that rotates after being electrified, provided that it can realize the movement of the connecting rod transmission portion and the locking or unlocking of the locking unit.

The connecting rod transmission unit 2 is used to realize the unlocking of the locking unit 4 under action of the driving force provided by the driving unit 4, and realize the locking of the locking unit 4 after the driving force is removed. FIG. 4 is a schematic structural diagram of the connecting rod transmission unit 2 according to a preferred embodiment of the invention. As shown in FIG. 2, the connecting rod transmission unit 2 comprises a first connecting rod portion 21, a second connecting rod portion 22 and a third connecting rod portion 23. The first connecting rod portion 21 is driven by the driving force to move downward, and moves upward after the driving force is removed. The second connecting rod portion 22 has one end connected to the first connecting rod portion 21, has the other end connected to the third connecting rod portion 23, and is rotatably fixed to the base body 1 at a position between the one end and the other end, so as to transfer the movement of the first connecting rod portion 21 to the third connecting rod portion 23. The third connecting rod portion 23 moves upward or downward corresponding to the first connecting rod portion 21, so as to realize the unlocking and locking of the locking unit 4.

The first connecting rod portion 21 and the third connecting rod portion 23 are preferably connected to the second connecting rod 22 through universal balls 24, 25, respectively, so as to enable the first connecting rod portion 21 and the third connecting rod portion 23 to rotate universally relative to the second connecting rod portion. The second connecting rod portion 22 is correspondingly provided with sockets 221, 222 mated with the balls 24, 25. The second connecting rod portion is provided with a shaft hole 223 between the two sockets 221, 222, and a shaft 26 (as shown in FIG. 1) fixed to the base body 1 is sleeved in the shaft hole 223, so as to enable the second connecting rod portion 22 to rotate around the shaft 26 fixed to the base body 1 to realize transfer of the movement of the first connecting rod portion 21 to the third connecting rod portion 23.

The first connecting rod portion 21 further comprises a force bearing unit for bearing the driving force 211. In the embodiment as shown in FIG. 1 of the invention, the force bearing unit is, for example, a push rod head in a plate form, and can move downward toward the electromagnet pressing block under attraction by the electromagnet pressing block after an electrical signal is applied to the electromagnet pressing block. In addition, further, the first connecting rod portion 21 further comprises an elastic restoring element 27 (as shown in FIG. 1), for example, a restoring spring, to enable the force bearing unit to return to an original position. One end of the elastic restoring element is fixed to the lower support frame of the base body 1, and the other end of the elastic restoring element 27 is fixed to the force bearing unit 211, so as to enable the first connecting rod portion 21 to return to an initial position after the driving force is removed.

The third connecting rod portion 23 comprises a stopping structure 231 configured to enabling the locking unit 4 to be locked or unlocked. Specifically, in the embodiment as shown in FIG. 1 of the invention, the stopping structure 231 is, for example, a stopping block, and can be inserted into a concave portion 41 formed on the locking unit 4, so as to limit a hook 41 of the locking unit 4 to rotate around a rotating shaft 43, so that the locking unit is in a locking state. When the stopping structure 231 is removed from the concave portion 41, the hook 41 of the locking unit 4 may rotate around the rotating shaft 43, that is, the locking unit 4 is in an unlocking state. Further preferably, the stopping block may have a slope design, for example, a trapezoidal shape, to cooperate with the concave portion to achieve a fixed locking effect, thereby ensuring the locking reliability. Specifically, the length of the side of the stopping block 231 in a direction away from the locking unit 4 is greater than the length of the side of the stopping block 231 in a direction facing the locking unit 4, that is, the stopping structure is formed to be wedge-shaped in a direction of the movement of the third connecting rod portion. The specific unlocking and locking states thereof will be described below. The third connecting rod portion 23 is further provided with an elastic restoring element 28, as shown in FIG. 1, for example, the elastic restoring element 28 is a restoring spring configured to enabling the third connecting rod portion to return to an original position. The second connecting rod portion 22 transfers the movement of the first connecting rod portion 21 to the third connecting rod portion 23 by a way of rotating around the rotating shaft 26. It will be described below in detail.

It should be noted that the above description of the structures of the first connecting rod portion 21, the second connecting rod portion 22 and the third connecting rod portion 22 are non-limiting, provided that the driving force of the driving unit can be transferred to the locking unit. The elastic restoring elements disposed on the first connecting rod portion 21 and the third connecting rod portion 23 may be not limited to the forms as described above, and may also be other elastic elements. Further, the position restoration of the connecting rod portions may be realized by using such as a torsion spring disposed on the second connecting rod portion 22, for example, disposed on the rotating shaft 26 of the second connecting rod portion. In addition, further, the elastic restoring elements may be even not provided. Instead, with the weight balancing principle of the first connecting rod portion 21, the second connecting rod portion 22 and the third connecting rod portion 23, the connecting rod transmission unit 2 automatically returns to the initial position after the electrical signal is removed.

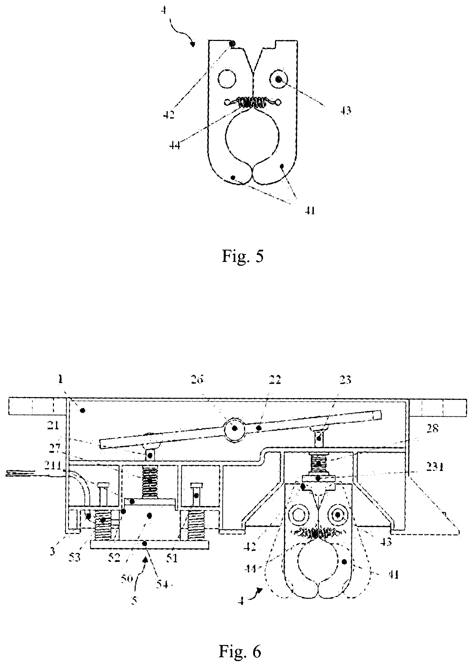

FIG. 5 is a schematic structural diagram of the locking unit according to a preferred embodiment of the invention. As shown in FIG. 5, the locking unit 4 preferably comprises a pair of hook bodies 41, and when the locking unit 4 is in a locking state, the pair of hook bodies are closed, and are locked to lock structures, such as a ring-shaped, rod-shaped or hook-shaped structure, correspondingly provided on the battery pack. At least one hook can rotate around the rotating shaft 43, so that in an unlocking state, the at least one hook can rotate around the rotating shaft to enable a pair of hook bodies in a closed state to be opened, so as to release the battery pack. The locking unit 4 further comprises a stopped structure 42, such as the concave portion 42 described above, which can cooperate with the stopping structure 231 to limit rotation of the at least one hook, so as to ensure that the locking unit 4 is in a locking state. Further, the locking unit 4 further comprises an elastic restoring element 44, such as a restoring spring, configured to enabling the hook to remain in a closed state. However, the restoring spring may be omitted, and the hook remains in a closed state relaying on its own weight.

In addition, it should be noted that the hook 41 of the locking unit 4 is not limited to the form described above, provided that it can form a structure that can cooperate with a locking structure on the battery pack. For example, the locking unit 4 may comprise a ring-shaped structure with an opening, and a sheet structure for closing the opening. Meanwhile, the cooperation between the stopping structure 231 and the concave portion 42 may be not limited to such a manner, provided that it can realize the locking or unlocking of the locking unit. For example, instead of the concave portion, an elastic toggle block is provided at this position, and the third connecting rod structure moves downward and enables the toggle block to be stopped at upper end positions on two hook bodies, so as to limit rotation of the two hook bodies to enable the hook bodies to be in a closed state.

Further preferably, as shown in FIG. 1, the battery pack fixing structure further comprises a positioning structure 6, such as a positioning hole, configured to cooperating with a positioned structure (not shown), such as a positioning pin, on the battery pack, so as to guide the battery pack as the battery pack is hoisted by a hoister to enable the locking structure on the battery pack to enter the hook 41 of the locking unit 4 more smoothly.

An unlocking operation of the battery pack fixing structure provided by the invention is described below with reference to FIG. 1 again. The specific structures and connection relationships of the parts as shown in FIG. 1 are described herein. However, as discussed above, the invention is not limited to the specific elements and the structures thereof as shown in FIG. 1.

As shown in FIG. 1, an electrical signal output by a control unit (not shown) is supplied to the electromagnet pressing block 50 of the driving unit 5 through an electrical wire 3. With the guidance by a pair of guide columns 51, the support plate 54 of the driving unit 5 supports the electromagnet pressing block 50 to move upward together. Meanwhile, the plate-shaped push rod head 211 on the first connecting rod portion 21 moves downward under action of an electromagnet attraction force until the push rod head 211 and the electromagnet pressing block 50 are attracted together. At this moment, a restoring spring 27 is pulled and the restoring spring 53 is pressed. When the electromagnet pressing block 50 moves to an upper-limit position, the notch 52 abuts against the lower fixing frame of the base body, so as to limit the electromagnet pressing block 50 to keep moving upward.

The plate-shaped push rod head 211 moves downward to enable the universal ball 24 of the first connecting rod portion 21 to rotate in the socket in the second connecting rod portion 22 and at the same time drive the second connecting rod portion 22 to rotate and tilt around the shaft 26 fixed to the base body 1, so as to cause the third connecting rod portion 23 connected to the second connecting rod portion through the universal ball 25 to move upward. In this way, the stopping structure 231 moves upward and is detached from the concave portion 42 so as to enable the locking unit 4 to be in an unlocking state, that is, the hook 41 can rotate around the shaft 43. At this moment, a restoring spring 28 is pressed.

When the locking unit 4 is in an unlocking state, the battery pack moves downward under action of its own weight to be detached from the hook 41 or moves upward under action of the hoister to enter the hook. Then the hook 41 preferably returns to an initial state, that is, in a closed state, under action of a tensile force of the hook restoring spring 44.

FIG. 6 is a front view of the battery pack fixing structure in an unlocking state according to a preferred embodiment of the invention. As shown in FIG. 6, when the control unit outputs an electrical signal, the electromagnet pressing block 51 moves upward, the plate-shaped push rod head 211 moves downward, and the second connecting rod portion rotates around the shaft 26, so as to drive the third connecting rod portion 23 to move upward. The stopping structure 231 moves out of the concave portion 42, so that the hook 41 is in a state of being rotatable around the shaft 43, and the locking unit 4 is in an unlocking state. In this unlocking state, the battery pack moves downward under its own weight to be detached from the hook 41 or moves upward under action of the hoister to enter the hook. Dotted lines represent the hook 41 in an open state.

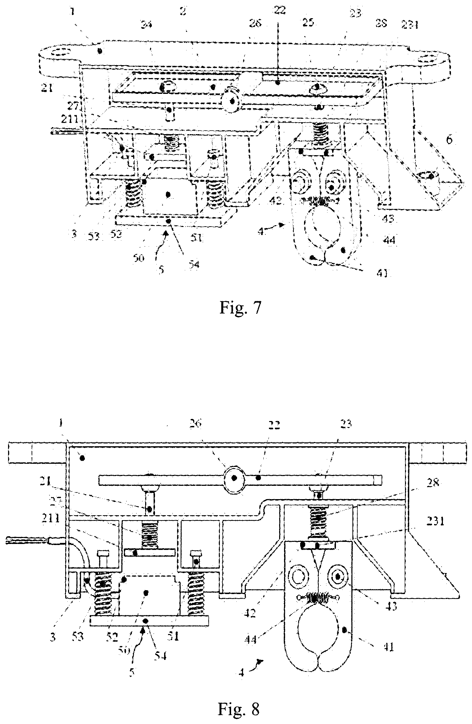

Next, the locking state of the battery pack fixing structure is described with reference to FIGS. 7 and 8. FIG. 7 is a three-dimensional schematic structural diagram of the battery pack fixing structure in a locking state according to a preferred embodiment of the invention. FIG. 8 is a schematic structural plane diagram of the battery pack fixing structure in a locking state according to a preferred embodiment of the invention. As shown in FIGS. 7 and 8, in the unlocking state as described above, it is assumed that the battery pack is lifted by the hoister (not shown), and the positioned structure on the battery pack is guided by the positioning structure 6 of the battery pack fixing structure to move toward the battery pack fixing structure. Specifically, for example, the positioning pin moves upward along the positioning hole, and enables the locking structure on the battery pack to enter the hook of the locking unit 4, that is, enables the battery pack to be in a fixed state. Then the control unit cuts off the electrical signal that is applied to the electromagnet pressing block 50 through the electrical wire 3. Preferably, under action of the restoring springs, the connecting rod portions return to initial positions, and the stopping structure 231 is inserted in the concave portion 42 of the locking unit 4 to limit the hook of the locking unit 4 to rotate around the shaft 43, so as to enable the locking unit 4 to be in a locking state to fix the battery pack. The restoring spring 28 preferably tightly presses the stopping structure 231 so as to ensure the fixing reliability.

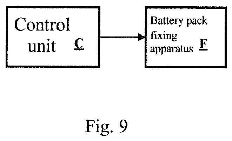

In addition, as shown in FIG. 9, the invention further provides a battery pack replacing apparatus that can realize rapid replacement of a battery pack of an electric vehicle, the battery pack replacing apparatus comprising a control unit C and the battery pack fixing structure F as described above.

The operation of replacing a battery pack by using the battery pack replacing apparatus will be completely describe below. When the power of the available battery pack of the electric vehicle reaches a preset threshold, a power indication unit indicates that the battery pack needs to be replaced. When the hoister reaches a battery swap position of the electric vehicle, the control unit C sends a signal to the driving unit 5 through the electrical wire 3 to drive the electromagnet pressing block to generate a magnetic attraction force. As described above, the first connecting rod portion 21 moves downward under action of the magnetic attraction force of the electromagnet pressing block to drive the second connecting rod portion 22 to rotate and further drive the third connecting rod portion 23 to move upward, the stopping structure 231 moves out of the concave portion 42 of the locking unit 4, the hook 41 may rotate around the shaft 43, that is, the locking unit 4 is unlocked, and the battery pack is detached from the locking unit 4 and is transported by the hoister to a charging and maintenance station for charging.

Meanwhile, in this unlocking state, a fully charged battery pack is lifted by the hoister to move toward the battery pack fixing structure, the positioning pin moves upward along a positioning hole 6, and the corresponding locking structure on the battery pack overcomes the tensile force of the restoring spring 44 to enter a fixed position. Also, preferably, the hook 41 returns to an initial state, that is, a closed state, under action of the restoring spring 44. At this moment, the control unit C cuts off the electrical signal to enable the electromagnet pressing block to lose the magnetic attraction force. Preferably, under action of the restoring springs, the connecting rod portions of the connecting rod transmission unit 2 return to original positions, and the stopping structure 231 is inserted in the concave portion 42, so as to limit the hook 41 to rotate around the shaft 43, that is, the locking unit 4 is in a locking state, that is, the battery pack is fixed. Preferably, the restoring spring 53 pushes the electromagnet pressing block 50 and the support plate 54 to move downward to tightly press the battery pack, thereby preventing the battery pack from shaking.

The battery pack fixing structure and the battery pack replacing apparatus of the invention are described above. In the solution according to the invention, the driving unit 5 is electrified and then supplies a driving force to drive action of the connecting rod transmission unit 2, so as to enable the locking unit 4 to be unlocked and to enable the locking unit 4 to be locked after the connecting rod transmission unit 2 is restored. In this way, the unlocking and locking of a battery pack of an electric vehicle as well as the rapid replacement and rapid mounting of the battery pack are realized. The battery pack fixing structure and the battery pack replacing system of the invention are simple in structure, low in cost and simple to maintain; Since an external electrical signal is used to perform control to realize locking of the locking unit after power-off, a highly reliable battery pack locking performance can be realized, and a function of repeated locking and unlocking can be realized. Meanwhile, due to the simple operation, the battery pack can be replaced conveniently, rapidly and efficiently.

The foregoing description is merely the embodiments of the invention and is not intended to be limiting of the invention, and various changes and modifications may be made by a person skilled in the art. Any modifications, equivalent substitutions, improvements etc. made within the spirit and principles of the invention are intended to be included within the scope of protection of the invention.

## Claims

1. A battery pack fixing structure, comprising:
a base body, a driving unit, a connecting rod transmission unit and a locking unit, wherein
the base body is fixed to an electric vehicle body to support the driving unit, the connecting rod transmission unit and the locking unit;
the driving unit is configured to supply a driving force;
the connecting rod transmission unit is configured to unlock the locking unit under the action of the driving force, and to lock the locking unit after the driving force is removed; and
the locking unit is configured to lock a battery pack in a locking state, and to release the battery pack in an unlocking state.

2. The battery pack fixing structure of claim 1, wherein
the driving unit comprises an electromagnet pressing block and a frame body supporting the electromagnet pressing block on the base body; and when an electrical signal is applied, the driving force provided by the driving unit is an electromagnetic attraction force.

3. The battery pack fixing structure of claim 2, wherein
the frame body comprises a support structure and a guide structure that has one end fixed to the support structure and the other end movably connected on the base body.

4. The battery pack fixing structure of claim 2 or 3, wherein
a limiting structure is formed on the frame body and is configured to limit a movement range of the driving unit.

5. The battery pack fixing structure of claim 2 or 3, wherein
the driving unit further comprises an elastic restoring element arranged between the frame body and the base body.

6. The battery pack fixing structure of any one of claims 1 to 5, wherein
the connecting rod transmission unit comprises a first connecting rod portion, a second connecting rod portion and a third connecting rod portion;
the first connecting rod portion moves downward under action of the driving force, and moves upward after the driving force is removed;
one end of the second connecting rod portion is connected to the first connecting rod portion, and the other end of the second connecting rod portion is connected to the third connecting rod portion, and is rotatably fixed to the base body at a position between the one end and the other end, so as to transfer the movement of the first connecting rod portion to the third connecting rod portion; and the third connecting rod portion moves upward or downward corresponding to the first connecting rod portion so as to unlock or lock the locking unit.

7. The battery pack fixing structure of claim 6, wherein
universal balls are formed on the first connecting rod portion and the third connecting rod portion, and the universal balls are mated with sockets provided in the second connecting rod portion.

8. The battery pack fixing structure of claim 6 or 7, wherein
the second connecting rod portion is provided with a shaft hole between the one end and the other end, and a connecting rod shaft fixed to the base body is sleeved in the shaft hole, so as to rotate the second connecting rod portion around the connecting rod shaft to transfer the movement of the first connecting rod portion to the third connecting rod portion.

9. The battery pack fixing structure of any one of claims 6 to 8, wherein
the first connecting rod portion comprises a force bearing unit for bearing the driving force, and moves downward under action of the driving force.

10. The battery pack fixing structure of claim 9, wherein
the first connecting rod portion further comprises an elastic restoring element configured to return the force bearing unit to an original position, one end of the elastic restoring element is fixed to the base body, and the other end of the elastic restoring element is fixed to the force bearing unit, so as to the first connecting rod portion return to an initial position after the driving force is removed.

11. The battery pack fixing structure of any one of claims 6 to 10, wherein
the third connecting rod portion comprises a stopping structure configured to lock or unlock the locking unit.

12. The battery pack fixing structure of claim 11, wherein
the stopping structure is wedge-shaped in a movement direction of the third connecting rod portion.

13. The battery pack fixing structure of any one of claims 6 to 12, wherein
the third connecting rod portion further comprises an elastic restoring element configured to return the third connecting rod portion to an original position.

14. The battery pack fixing structure of claim 1, wherein
the locking unit comprises a hook and a stopped structure;
the hook rotates around a rotating shaft to lock the battery pack or release the battery pack; and
the stopped structure is operated by the connecting rod transmission unit to enable the hook to lock the battery pack or release the battery pack.

15. The battery pack fixing structure of claim 11 or 12, wherein
the locking unit comprises a hook and a stopped structure;
the hook rotates around a rotating shaft to lock the battery pack or release the battery pack; and
the stopped structure cooperates with the stopping structure to enable the hook to lock the battery pack or release the battery pack.

16. The battery pack fixing structure of claim 14 or 15, wherein
the locking unit further comprises an elastic restoring element to enable the hook to remain in a closed state.

17. The battery pack fixing structure of any one of claims 1 to 16, further comprising:
a positioning structure configured to cooperating with a positioned structure on the battery pack to guide movement of the battery pack.

18. A battery pack replacing apparatus, comprising:
a battery pack fixing structure of any one of claims 1 to 17; and
a control unit configured to apply an electrical signal to a driving unit to enable the driving unit to provide a driving force.
